# EUROPEAN PATENT APPLICATION

(11) **EP 3 112 725 A1**
(43) Date of publication of application: **04.01.2017**
(21) Application number: 15752852.2
(22) Date of filing: 27.01.2015
(51) Int. Cl.: F16H 37/12, F16H 37/02, F16H 61/40

(54) **STEPLESS TRANSMISSION AT SPEED-REGULATING SCREW SIDE**

(30) Priority: 24.02.2014 CN 201410060740
(71) Applicant: Tan, Bo, Tianshuiyuan Dongli, Chaoyang District Beijing 100026 (CN)
(72) Inventor: Tan, Bo, Tianshuiyuan Dongli, Chaoyang District Beijing 100026 (CN)
(74) Representative: Zizzari, Massimo
(86) International application number: PCT/CN2015/000049
(87) International publication number: WO 2015/124035

(57) **Abstract**

The invention relates to a continuously variable transmission with side speed regulating lead screw, and it comprises: a housing, a driving flat disc system, a power input system, a middle flat disc system, a power output system, a compaction system, a speed regulating ratio system of the middle flat disc, and serial and parallel structures. Since the previously most successful continuously variable transmission is the CVT continuously variable transmission, such continuously variable transmission transmits power depending on the conical disc and steel belt, and the limitation of the continuously variable transmission restrains the extensive application of such continuously variable transmission, whereas the continuously variable transmission of the invention transmits power depending on the mutual compaction between the driving flat disc and the middle flat disc as well as between the middle flat disc and the driven flat disc. The invention aims to solve the problem of too small transmission torque existing in previous continuously variable transmissions, and it realizes the objective of regulating the speed ratio by the movement of the middle flat disc up and down.

## Description

### Field of the Invention

The invention belongs to the field of continuously variable transmission.

### Background of the Invention

Since the previously most successful continuously variable transmission is the CVT continuously variable transmission, such continuously variable transmission transmits power depending on the conical disc and steel belt, and the limitation of the continuously variable transmission restrains the extensive application of such continuously variable transmission, whereas the continuously variable transmission of the invention transmits power depending on the mutual compaction between the driving flat disc and the middle flat disc as well as between the middle flat disc and the driven flat disc.

### Summary of the Invention

The invention aims to solve the problem of low mechanical efficiency existing in previous continuously variable transmission, the driving flat disc transmits the power to the middle flat disc through friction, the middle flat disc also transmits the power to the fixed driven flat disc and the sliding driven flat disc through friction, the power is transmitted to the output shaft through the driven flat discs, and the power is transmitted to the transmission by the output shaft.

The speed regulating lead screw side continuously variable transmission comprises a housing, a driving flat disc system, a middle flat disc system, a power output system, a power input system, a speed regulating ratio system of the middle flat disc, a compaction system, serial and parallel structures, and the structural system of input shaft gear, intermediate gear of the driving flat disc and driving flat disc gear.

Driving flat disc system: A pair of driving flat discs are matched with the driving flat disc gear through the driving flat disc keys and tightened by driving flat disc nuts, the bracket beams of the driving flat discs are arranged both the half bracket I of the driving flat disc and the half bracket II of the driving flat disc, the driving flat disc mandrel I is arranged in the middle of the bracket beam of the driving flat disc on the half bracket I of the driving flat disc, the driving flat disc mandrel II is arranged in the middle of the bracket beam of the driving flat disc on the half bracket II of the driving flat disc, the half bracket I of the driving flat disc and the half bracket II of the driving flat disc are tightened and fixed by the mandrel bolt of the driving flat disc and the bracket bolt of the driving flat disc, and the driving flat discs are in running fit with the driving flat disc mandrel I and the driving flat disc mandrel II through the shaft. The lowest points of the bracket beams of the driving flat discs are lower than the plane of the driving flat discs.

Power input system: In the structure of three middle flat discs in parallel, the schemes for the structural system of input shaft gear, intermediate gear of the driving flat disc and driving flat disc gear: 1. The input shaft gear is matched with one driving flat disc gear, and each pair of neighboring driving flat disc gears are matched with the same intermediate gear of the driving flat disc; 2. Each pair of neighboring driving flat disc gears are matched with the same intermediate gear of the driving flat disc, and the input shaft gear transmits power to each driving flat disc gear through the intermediate gear of the driving flat disc. 3. The input shaft gear transmits the power to two driving flat disc gears simultaneously, and one of the driving flat disc gears then transmits the power to the other driving flat disc gear through the intermediate gear of the driving flat disc. This kind of continuously variable transmission has the intermediate gear of the driving flat discs which can be matched with two driving flat disc gears, respectively, and the intermediate gear of the driving flat disc can be matched with the input shaft gear at the same time of matching with one driving flat disc gear.

Power output system: There are driven flat disc grooves on the driven flat discs (including the fixed driven flat disc, the middle driven flat disc and the sliding driven flat disc), the output shaft passes through the center hole of the fixed driven flat disc, the fixed driven flat disc is fixed and connected with the output shaft, the sliding driven flat disc and the output shaft can relatively slide but can't relatively rotate, the output shaft passes through the center hole of the sliding driven flat disc, the sliding driven flat disc is fixed and connected with the hydraulic cylinder block, and the power is transmitted out of the transmission by the output shaft.

Middle flat disc system: The lead screw nut of the middle flat disc on one part of the middle flat disc bracket is matched with the lead screw of the middle flat disc, the other part of the middle flat disc bracket is matched with the middle flat disc through the middle flat disc bearing, the lead screw of the middle flat disc is arranged on the side of the middle flat disc, the lead screw nut of the middle flat disc is integrated or fixed and connected with the middle flat disc bracket, and the middle flat disc works between the driving flat discs and the driven flat discs (including the fixed driven flat disc, the sliding driven flat disc and the middle driven flat disc). The lead screw of the middle flat disc can be sliding lead screw, rolling lead screw (including ball lead screw and roller lead screw) and hydrostatic lead screw; the matched lead screw nut of the middle flat disc can be sliding nut, rolling nut (including ball nut and roller nut) and hydrostatic nut.

Forward and reverse conversions: The forward and reverse conversions of the continuously variable transmission shall be completed by the middle flat disc spanning from one side of the bracket beam of the driving flat disc to the other side of the bracket beam of the driving flat disc, namely, along with the rotation of the lead screw of the middle flat disc, the middle flat disc is moved to the bracket beam of the driving flat disc, one end of the middle flat disc continues to move along the bevel of the bracket beam of the driving flat disc, it continues to move after reaching the top of the bracket beam of the driving flat disc, and the other end of the middle flat disc continues to move along the bevel of the driven flat disc grooves of the driven flat discs (including the fixed driven flat disc, the sliding driven flat disc and the middle driven flat disc), so that the middle flat disc can reach the other side of the bracket beam of the driving flat disc. Owing to the existence of the driven flat disc grooves, the other end of the middle flat disc can move in the driven flat disc grooves. 1. When the driven flat disc grooves are deep enough, as the middle flat disc gets across the driven flat disc grooves, the compaction system is decompressed, and the middle flat disc can also span over the bracket beam of the driving flat disc without moving the sliding driven flat disc; 2. When the driven flat disc grooves are not deep enough, as the middle flat disc gets across the driven flat disc grooves, the compaction system is decompressed, and the middle flat disc can span over the bracket beam of the driving flat disc only when the sliding driven flat disc is moved towards the compaction system for a certain distance, but the moving distance of the sliding driven flat disc shall be less than that when there is no sliding driven flat disc groove on the sliding driven flat disc, the continuously variable transmission can be made into smaller size, and the cross section of the bracket beam of the driving flat disc can be made into bigger area. This kind of transmission can use the forward function but not use the reverse function.

Compaction system: 1. The hydraulic compaction system comprises a hydraulic lever bracket which is fixed and connected with the output shaft, and when the hydraulic cylinder is compressed, one end of the hydraulic lever pushes against the sliding driven flat disc: one end of the hydraulic lever is contacted with the sliding driven flat disc through the hydraulic lever block; the hole in the middle of the hydraulic lever is hinged with the hydraulic lever bracket, and the hydraulic plate pulls the other end of the hydraulic lever; the hole at the other end of the hydraulic lever can be hinged with one end of the hinge of the hydraulic lever, and the other end of the hinge of the hydraulic lever can be hinged with the hinging base of the hydraulic lever, and the hinging base of the hydraulic lever is fixed on the hydraulic plate; the output shaft passes through the center hole of the hydraulic plate, and the hydraulic plate can slide on the output shaft relative to it. 2. Spring compaction system: One end of the strong spring pushes against the sliding driven flat disc, the other end pushes against the snap ring on the output shaft, and the snap ring on the output shaft is fixed and connected with the output shaft.

The compaction system is not limited to the above two manners.

Speed regulating ratio system of the middle flat disc: It is specified that the speed ratio is obtained by dividing the absolute value of input shaft speed by the absolute value of output shaft speed, the speed regulating ratio system of each middle flat disc: the lead screw for the bearing seat of the middle flat disc is fixed and connected with the housing, one end of the lead screw of the middle flat disc is installed on the lead screw for the bearing seat of the middle flat disc through the bearing, the other end of the lead screw of the middle flat disc is installed on the housing through the bearing, the threaded part of the lead screw of the middle flat disc is matched with the lead screw nut of the middle flat disc on the middle flat disc bracket, the lead screw nut of the middle flat disc is fixed and connected or integrated with the middle flat disc bracket, and along with the rotation of the lead screw of the middle flat disc, the lead screw nut of the middle flat disc drives the middle flat disc bracket and the middle flat disc to move back and forth along with the axis of the lead screw of the middle flat disc to realize the process of speed regulating ratio for the middle flat disc. The lead screw gear of the middle flat disc is fixed on the lead screw of the middle flat disc, the lead screw gear of the middle flat disc can be a worm gear, and the lead screw gear of the middle flat disc is matched with the regulating shaft gear of the middle flat disc on the regulating shaft of the middle flat disc; the regulating shaft gear of the middle flat disc can be a worm, the regulating shaft gear of the middle flat disc is fixed and connected with the regulating shaft of the middle flat disc, the regulating shaft of the middle flat disc is arranged vertical to the axis of the lead screw of the middle flat disc, the regulating shaft of the middle flat disc is arranged in parallel with the output shaft, and the speed regulating pinion of the middle flat disc on the regulating shaft of the middle flat disc is fixed and connected with the regulating shaft of the middle flat disc.

Position 1 of the regulating shaft end of the middle flat disc: The regulating shaft end of the middle flat disc is arranged on one speed regulating pinion of the middle flat disc;

Position 2 of the regulating shaft end of the middle flat disc: The regulating shaft end of the middle flat disc is separately matched with the gear at the regulating shaft end of the middle flat disc, and the regulating shaft end of the middle flat disc is matched with the speed regulating gearwheel of the middle flat disc.

The speed regulating pinion of the middle flat disc of the speed regulating ratio system of each middle flat disc is matched with the same speed regulating gearwheel of the middle flat disc, 1. In Position 1 of the regulating shaft end of the middle flat disc: The speed regulating power is transmitted from the regulating shaft end of the middle flat disc to one speed regulating pinion of the middle flat disc and then transmitted to each of the rest of speed regulating pinions of the middle flat discs through the speed regulating gearwheel of the middle flat disc; 2. In Position 2 of the regulating shaft end of the middle flat disc: The speed regulating power is transmitted to the speed regulating gearwheel of the middle flat disc from the regulating shaft end of the middle flat disc and then transmitted to each of the rest of speed regulating pinions of the middle flat discs by the speed regulating gearwheel of the middle flat disc, and each speed regulating pinion of the middle flat disc drives each middle flat disc to move back and forth along the axis of the lead screw of the middle flat disc through the speed regulating ratio system of each middle flat disc to realize the regulation of speed ratio by the middle flat disc.

Parallel and serial structure: The number of middle flat discs connected with the same driven flat disc (including the fixed driven flat disc, the sliding driven flat disc and the middle driven flat disc) is considered as the number of parallel connections, the invention can have more than two (including two) middle flat discs in parallel, the number of the speed regulating ratio systems of each middle flat disc is also the same as the number of middle flat discs in parallel; the structure between every two neighboring driven flat discs (including the fixed driven flat disc, the sliding driven flat disc and the middle driven flat disc) is called as a transmission, more than two (including two) transmissions can be connected in series, and the number of transmissions in series is the number of serial connections for the continuously variable transmission. Manner of serial connection: Multiple transmissions in series share the same output shaft, multiple transmissions in series shaar the same input shaft, and the number of speed regulating ratio systems for each middle flat disc is also the same as the number of middle flat discs in parallel.

Work principles of the continuously variable transmission:
1. Work principle of power transmission: Power enters the continuously variable transmission from the input shaft, and the power is transmitted to the input shaft gear through the input shaft. Power transmission route according to the schemes for the structural system of input shaft gear, intermediate gear of the driving flat disc and driving flat disc gear: 1. The input shaft gear transmits the power to one driving flat disc gear, and the driving flat disc gear then transmits the power to other driving flat disc gears through the intermediate gear of the driving flat disc; 2. Each pair of neighboring driving flat disc gears are connected by one intermediate gear of the driving flat disc, the input shaft gear transmits the power to each driving flat disc gear through the intermediate gear of the driving flat disc. 3. The input shaft gear transmits the power to two driving flat disc gears simultaneously, and then one of the driving flat disc gears transmits the power to the other driving flat disc gear through the intermediate gear of the driving flat disc. The driving flat disc gear then transmits the power to the driving flat discs, when the hydraulic cylinder is compressed, the driving flat discs transmit the power to middle flat disc by friction, the middle flat disc also transmits the power to the fixed driven flat disc and the sliding driven flat disc through friction, the power is transmitted to the output shaft through the driven flat discs, and the power is transmitted out of the transmission by the output shaft.
2. Work principle of the hydraulic cylinder: After the hydraulic oil is pressurized, on the one hand, the oil pressure acts on the sliding driven flat disc; on the other hand, the oil pressure acts on the hydraulic plate, the hydraulic plate pulls the hinge of the hydraulic lever through the hinging base of the hydraulic lever, then the hinge of the hydraulic lever pulls the hydraulic lever, and the hydraulic lever compresses the sliding driven flat disc through the hydraulic lever block by taking the hydraulic lever bracket as the fulcrum.
3. Work principle for speed regulating ratio of middle flat disc: It is specified that the speed ratio is obtained by dividing the absolute value of the input shaft speed by the absolute value of the output shaft speed. The speed regulating power enters the continuously variable transmission from the regulating shaft end of the middle flat disc,
   1. In the structure that the regulating shaft end of the middle flat disc is fixed on the regulating shaft of the middle flat disc, the speed regulating power is transmitted from the regulating shaft end of the middle flat disc to one speed regulating pinion of the middle flat disc, then speed regulating pinion of the middle flat disc transmits the speed regulating power to the speed regulating gearwheel of the middle flat disc, the speed regulating gearwheel of the middle flat disc then transmits it to each of the rest of speed regulating pinions of the middle flat disc, and each speed regulating pinion of the middle flat disc drives each middle flat disc to move back and forth along the axis of the lead screw of the middle flat disc through the speed regulating ratio system of each middle flat disc to realize the regulation of the speed ratio of the middle flat disc;
   2. In the structure that the regulating shaft end of the middle flat disc is separately fixed and connected with the regulating shaft end gear of the middle flat disc, the regulating shaft end gear of the middle flat disc is matched with the speed regulating gearwheel of the middle flat disc, the speed regulating power is transmitted from the regulating shaft end of the middle flat disc to the speed regulating gearwheel of the middle flat disc through the regulating shaft end gear of the middle flat disc, the speed regulating gearwheel of the middle flat disc then transmits it to each of the rest of speed regulating pinions of the middle flat disc, and each speed regulating pinion of the middle flat disc drives each middle flat disc to move back and forth along the axis of the lead screw of the middle flat disc through the speed regulating ratio system of each middle flat disc to realize the regulation of speed ratio of the middle flat disc.

Since the structure of the invention is adopted, the continuously variable transmission has the following beneficial effects:
1. Big power and torque of power transmission, and small power loss.
2. Function of forward and reverse conversion.
3. The lead screw of the middle flat disc is arranged on the side of the middle flat disc, the size of the middle flat disc can be smaller, and the strength of the lead screw of the middle flat disc can be higher.

### Brief Description of the Drawings

The figures are explained below:
Figure 1 is the A-A section view of Figure 5 and the structural drawing of the continuously variable transmission, and the middle flat disc is in the forward position of the power output shaft;
Figure 2 is the B-B section view of Figure 5 and the structural drawing of the continuously variable transmission, and the position of the input shaft can be seen in the figure;
Figure 3 is the section view of the serial structure of two continuously variable transmissions;
Figure 4 is the matching drawing of the middle flat disc with the lead screw of the middle flat disc, and the middle flat disc is in the farthest distance from the output shaft;
Figure 5 is the matching drawing of the middle flat disc with the lead screw of the middle flat disc matching drawing, and the middle flat disc is in the nearest distance from the output shaft;
Figure 6 is the sketch map of Scheme 1 for the structural system of input shaft gear, intermediate gear of the driving flat disc and driving flat disc gear in the structure of three middle flat discs in parallel;
Figure 7 is the sketch map of Scheme 2 for the structural system of input shaft gear, intermediate gear of the driving flat disc and driving flat disc gear in the structure of three middle flat discs in parallel;
Figure 8 is the sketch map of Scheme 3 for the structural system of input shaft gear, intermediate gear of the driving flat disc and driving flat disc gear in the structure of three middle flat discs in parallel;
Figure 9 is the second structural sketch map of Scheme 1 for the structural system of input shaft gear, intermediate gear of the driving flat disc and driving flat disc gear in the structure of three middle flat discs in parallel;
Figure 10 is the layout drawing that a middle flat disc bracket and a lead screw of the middle flat disc is arranged on the each middle flat disc, and the axis of the middle flat disc bracket is vertical to the axis of the output shaft;
Figure 11 is the layout drawing that a middle flat disc bracket and lead screw of the middle flat disc are arranged on each middle flat disc, the axis of the middle flat disc bracket is in a certain angle with the axis of the output shaft;
Figure 12 is the layout drawing that two middle flat disc brackets and two lead screw of the middle flat discs are arranged on the each middle flat disc, and the axes of the middle flat disc brackets are vertical to the axis of the output shaft;
Figure 13 is the layout drawing that two middle flat disc brackets and two lead screw of the middle flat discs are arranged on the each middle flat disc, and the axes of the middle flat disc brackets are in a certain angle with the axis of the output shaft;
Figure 14 is the D-D section view of Figure 16, as well as the structural drawing that the lead screw of the middle flat disc is a ball lead screw and the lead screw nut on the middle flat disc bracket is a ball;
Figure 15 is the E-E section view of Figure 14, as well as the structural drawing that the lead screw of the middle flat disc is a ball lead screw, the lead screw nut on the middle flat disc bracket is a ball nut, and the external loop orbit is indicated;
Figure 16 is the structural drawing that the middle flat disc has no center hole, the middle flat disc bearing is installed on the center shaft of the middle flat disc, the center shaft of the middle flat disc is fixed and connected or integrated with the middle flat disc;
Figure 17 is the structural drawing that the double-layer bearing of the middle flat disc is in the center hole of the middle flat disc;
Figure 18 is the structural drawing that the single-layer bearing of the middle flat disc is in the center hole of the middle flat disc;
Figure 19 is the structural drawing that the double-layer bearing of the middle flat disc is in the center hole of the middle flat disc, and the middle flat disc is thickened;
Figure 20 is the top view of Figure 16;
Figure 21 is the top view of Figure 17;
Figure 22 is the top view of Figure 18;
Figure 23 is the top view of Figure 19;
Figure 24 shows the phase of forward and reverse conversion that the middle flat disc is closest to the bracket beam of the driving flat disc;
Figure 25 shows the phase of forward and reverse conversion from the middle flat disc to the top of the middle beam of the driving flat disc;
Figure 26 shows the phase of forward and reverse conversion that middle flat disc passes over the top of the middle beam of the driving flat disc;
Figure 27 shows the phase of forward and reverse conversion that middle flat disc passes over the middle beam of the driving flat disc;
Figure 28 shows that the middle flat disc passes over the middle beam of the driving flat disc and starts to reverse;
Figure 29 is the structural drawing for Position 2 of the regulating shaft end of the middle flat disc, showing the matching relations of the speed regulating pinion of the middle flat disc, the regulating shaft end of the middle flat disc and the regulating shaft end gear of the middle flat disc with the speed regulating gearwheel of the middle flat disc;
Figure 30 is the left view of Figure 31;
Figure 31 is the structural drawing for the half bracket I of the driving flat disc;
Figure 32 is the right view of Figure 31;
Figure 33 is the left view of Figure 34;
Figure 34 is the structural drawing for the half bracket II of the driving flat disc;
Figure 35 is the left view of Figure 34;
Figure 36 is the component matching relation drawing of the half bracket I of the driving flat disc and the half bracket II of the driving flat disc with the driving flat disc;
Figure 37 is the matching relation drawing of the half bracket II of the driving flat disc with the driving flat disc gear, the input shaft gear and the intermediate gear of the driving flat disc;
Figure 38 is the matching relation drawing of the intermediate gear of the driving flat disc with the half bracket I of the driving flat disc and the half bracket II of the driving flat disc;
Figure 39 is the structural drawing of the transmission with middle flat discs in parallel, and the middle flat disc is in the nearest position to the output shaft;
Figure 40 the structural drawing of the transmission with middle flat discs in parallel, in the structural drawing, Scheme 1 for the structural system of input shaft gear, intermediate gear of the driving flat disc and driving flat disc gear: the input shaft gear is matched with two driving flat disc gears, and the two driving flat disc gears are matched with another two driving flat disc gears through the intermediate gear of the driving flat disc, respectively;
Figure 41 is the structural drawing of Position 2 of the regulating shaft end of the middle flat disc in the transmission with four middle flat discs in parallel, showing the matching relations of the speed regulating pinion of the middle flat disc, the regulating shaft end of the middle flat disc and the regulating shaft end gear of the middle flat disc with the speed regulating gearwheel of the middle flat disc;
Figure 42 is the structural drawing of the transmission with four middle flat discs in parallel. In the structural drawing, Scheme 2 for the structural system of input shaft gear, intermediate gear of the driving flat disc and driving flat disc gear: The input shaft gear is matched with one driving flat disc gear, and two neighboring driving flat disc gears are matched with the intermediate gear of the driving flat disc arranged between them;
Figure 43 is the structural drawing of the transmission with four middle flat discs in parallel, and the middle flat disc is the farthest position from the output shaft;
Figure 44 is the C-C section view of Figure 46, and the middle flat disc is in the forward position;
Figure 45 is the structural drawing of the transmission with five middle flat discs in parallel, and the middle flat disc is in the forward position;
Figure 46 is the structural drawing of the transmission with five middle flat discs in parallel, and the middle flat disc is the farthest position from the output shaft;
Figure 47 shows Scheme 2 for the structural system of input shaft gear, intermediate gear of the driving flat disc and driving flat disc gear in the structure of the continuously variable transmission with five middle flat discs in parallel: the input shaft gear is matched with one driving flat disc gear, and two neighboring driving flat disc gears are matched with the intermediate gear of the driving flat disc arranged between them;
Figure 48 is the structural drawing of the transmission with five middle flat discs in parallel, and the middle flat disc is in the nearest position to the output shaft;

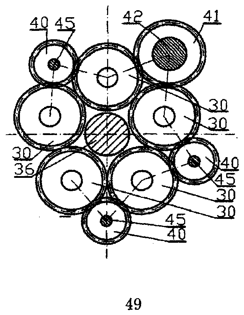

Figure 49 shows Scheme 1 for the structural system of input shaft gear, intermediate gear of the driving flat disc and driving flat disc gear in the structure of the continuously variable transmission with five middle flat discs in parallel: the input shaft gear is matched with two driving flat disc gears, the two driving flat disc gears are matched with another two driving flat disc gears through the intermediate gear of the driving flat disc, respectively, and the fifth driving flat disc gear is matched with one neighboring driving flat disc gear through the intermediate gear of the driving flat disc; In the figures: 1- Speed regulating pinion of the middle flat disc; 2- Bracket beam of the driving flat disc; 3- Lead screw gear of the middle flat disc; 4- Lead screw of the middle flat disc; 5- Regulating shaft of the middle flat disc gear; 6- Regulating shaft of the middle flat disc; 7- Driving flat disc key; 8- Driving flat disc nut; 9- Mandrel bolt of the driving flat disc; 10- Half bracket I of the driving flat disc; 11- Fixed driven flat disc; 12- Middle flat disc bracket; 13- Fixing snap ring of the fixed driven flat disc; 14-Driven flat disc groove; 15- Hydraulic cylinder block; 16- Middle flat disc; 17- Hinge of the hydraulic lever; 18- Hydraulic lever; 19- Hinging base of the hydraulic lever; 20-Hydraulic plate; 21- Hydraulic lever bracket; 22- Hydraulic plate spring; 23- Positioning pin of the hydraulic lever bracket; 24- Oil way communicator; 25- Oil inlet of the hydraulic cylinder; 26- Driving flat disc mandrel I; 27- Middle driven flat disc; 28-Hydraulic lever block; 29- Driving flat disc; 30- Driving flat disc gear; 31- Hydraulic oil way; 32- bracket bolt of the driving flat disc; 33- Middle flat disc bearing; 34- Driving flat disc mandrel II; 35- Half bracket II of the driving flat disc; 36- Output shaft; 37-Speed regulating gearwheel of the middle flat disc ; 38- Sliding driven flat disc; 39-lead screw for the bearing seat of the middle flat disc; 40- Intermediate gear of the driving flat disc; 41- Input shaft gear; 42- Input shaft; 43- Housing; 44- bracket key groove of the driving flat disc; 45- Intermediate gear of the driving flat disc shaft; 46-Regulating shaft end of the middle flat disc; 47- Regulating shaft end gear of the middle flat disc; 48- Ball of the ball lead screw; 49- External loop channel of ball nut; 50- Key groove of the housing; 51- Bearing seat of the input shaft; 52- Lead screw nut of the middle flat disc.

### Detailed Description of the Embodiments

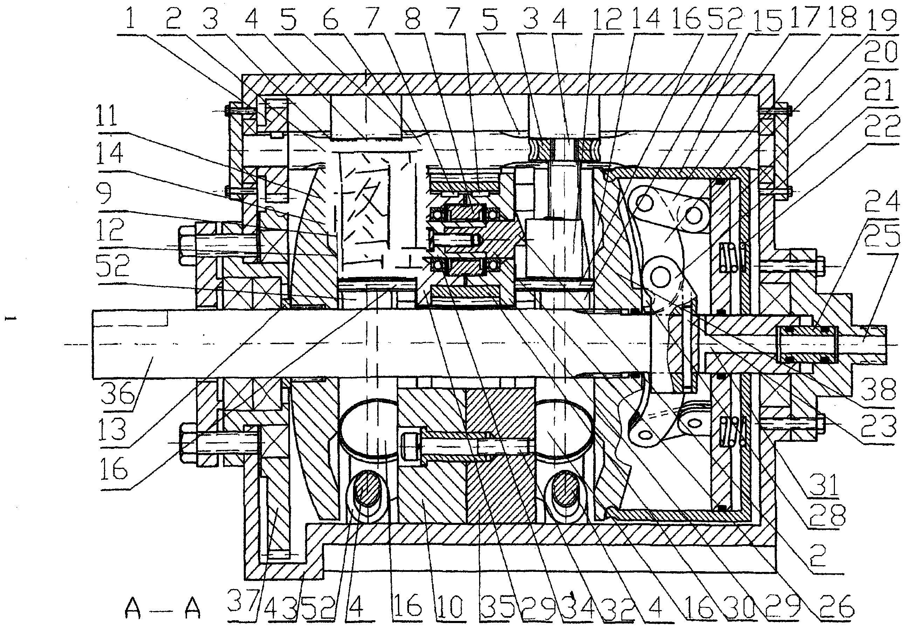

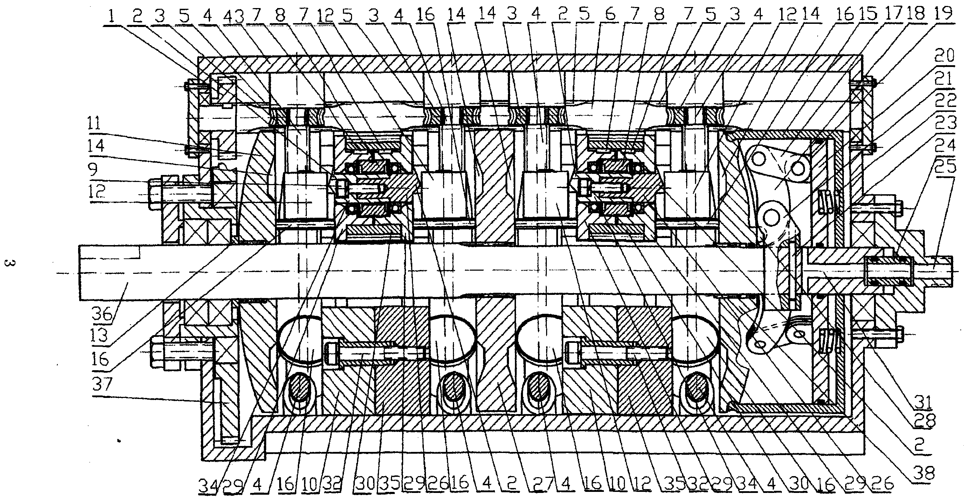

It can be seen in Figure 1, Figure 2, Figure 3, Figure 4, Figure 9, Figure 24, Figure 25, Figure 26, Figure 27, Figure 28, Figure 29, Figure 30, Figure 31, Figure 32, Figure 33, Figure 34, Figure 35, Figure 36, Figure 37 and Figure 38, driving flat disc system: A pair of driving flat discs 29 are matched with the driving flat disc gear 30 through the driving flat disc key 7 and tightened by the driving flat disc nut 8, the bracket beams 2 of the driving flat disc are arranged on both the half bracket I 10 of the driving flat disc and the half bracket II 35 of the driving flat disc, the driving flat disc mandrel I 26 is arranged in the middle of the bracket beam 2 of the driving flat disc on the half bracket I 10 of the driving flat disc, the driving flat disc mandrel II 34 is arranged in the middle of the bracket beam 2 of the driving flat disc on the half bracket II 35 of the driving flat disc, the half bracket I 10 of the driving flat disc and the half bracket II 35 of the driving flat disc are tightened and fixed with the bracket bolt of the driving flat disc 32 through the mandrel bolt 9 of the driving flat disc, and the driving flat disc is in running fit with the driving flat disc mandrel I 10 and the driving flat disc mandrel II 35 through bearings. The lowest point of the bracket beam 2 of the driving flat disc is higher than the plane of the driving flat disc 29.

Power output system: The driven flat disc grooves 14 are arranged on the driven flat discs (including the fixed driven flat disc 11, the middle driven flat disc 27 and the sliding driven flat disc 38), the output shaft 36 passes through the center hole of the fixed driven flat disc 11, the fixed driven flat disc 11 is fixed and connected with the output shaft 36, the sliding driven flat disc 38 and the output shaft 36 can relatively slide but can't relatively rotate, the output shaft 36 passes through the center hole of the sliding driven flat disc 11, the sliding driven flat disc 11 is fixed and connected with the hydraulic cylinder block 15, and the power is transmitted out of the transmission by the output shaft 36.

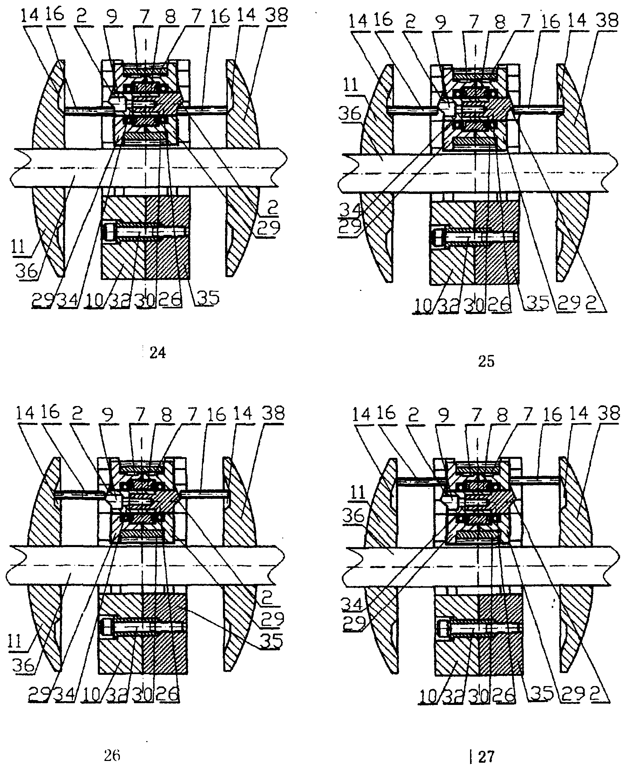

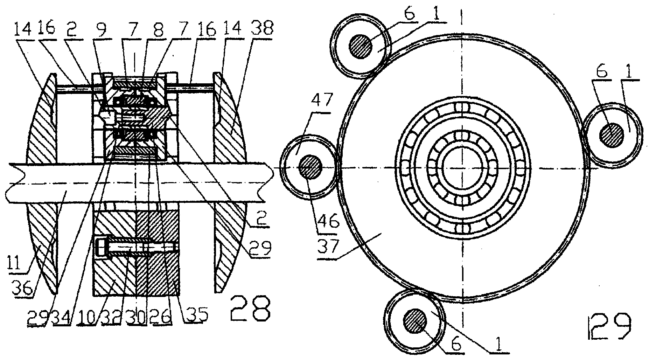

Forward and reverse conversions: 1. The forward and reverse conversions of the continuously variable transmission shall be completed by the middle flat disc 16 spanning from one side of the bracket beam 2 of the driving flat disc to the other side of the bracket beam 2 of the driving flat disc, namely, along with the rotation of the lead screw 4 of the middle flat disc, the middle flat disc 16 is moved to the position close to the bracket beam 2 of the driving flat disc (see Figure 24); 2. One end of the middle flat disc 16 continues to move along the bevel of the bracket beam 2 of the driving flat disc, and it continues to move after reaching the top of the bracket beam 2 of the driving flat disc (see Figure 25 and Figure 26); 3. The other end of the middle flat disc 16 continues to move along the bevel of the driven flat disc grooves 14 of the driven flat discs (including the fixed driven flat disc 11, and the sliding driven flat disc 38 and the middle driven flat disc 27), so that the middle flat disc 16 can reach the other side of the bracket beam 2 of the driving flat disc (see Figure 27 and Figure 28); owing to the existence of the driven flat disc grooves 14, the other end of the middle flat disc can move in the driven flat disc grooves 14.

Structural scheme of the driven flat disc grooves 14: 1. When the driven flat disc grooves 14 are deep enough, as the middle flat disc 16 gets across the driven flat disc grooves 14, the compaction system is decompressed, and the middle flat disc 16 can also span over the bracket beam 2 of the driving flat disc without moving the sliding driven flat disc; 2. When the driven flat disc grooves 14 are not deep enough, as the middle flat disc gets across the driven flat disc grooves 14, the compaction system is decompressed, and the middle flat disc can span over the bracket beam 2 of the driving flat disc only when the sliding driven flat disc 38 is moved towards the compaction system for a certain distance, but the moving distance of the sliding driven flat disc 38 shall be less than that when there is no sliding driven flat disc groove 14 on the sliding driven flat disc 38, the continuously variable transmission can be made into smaller size, and the cross section of the bracket beam 2 of the driving flat disc can be made into bigger area. This kind of transmission can use the forward function but not use the reverse function.

Compaction system: The hydraulic compaction system comprises a hydraulic lever bracket 21 which is fixed and connected with the output shaft 36, and when the hydraulic cylinder is compressed, one end of the hydraulic lever 18 pushes against the sliding driven flat disc 38: one end of the hydraulic lever 18 is contacted with the sliding driven flat disc 38 through the hydraulic lever block 28; the hole in the middle of the hydraulic lever 18 is hinged with the hydraulic lever bracket 21, and the hydraulic plate 20 pulls the other end of the hydraulic lever 18: the hole at the other end of the hydraulic lever 18 can be hinged with one end of the hinge 17 of the hydraulic lever, and the other end of the hinge 17 of the hydraulic lever can be hinged with the hinging base 19 of the hydraulic lever, and the hinging base 19 of the hydraulic lever is fixed on the hydraulic plate 20; the output shaft 36 passes through the center hole of the hydraulic plate 20, and the hydraulic plate 20 can slide on the output shaft 36 relative to it.

Speed regulating ratio system of the middle flat disc: It is specified that the speed ratio is obtained by dividing the absolute value of input shaft 42 speed by the absolute value of output shaft 36 speed, the speed regulating ratio system of each middle flat disc 16: the lead screw 39 for the bearing seat of the middle flat disc is fixed and connected with the housing 43, one end of the lead screw 4 of the middle flat disc is installed on the lead screw 39 for the bearing seat of the middle flat disc through the bearing, the other end of the lead screw 4 of the middle flat disc is installed on the housing 43 through the bearing, the threaded part of the lead screw 4 of the middle flat disc is matched with the lead screw nut 52 of the middle flat disc on the middle flat disc bracket 12, the lead screw nut 52 of the middle flat disc is fixed and connected or integrated with the middle flat disc bracket 12, and along with the rotation of the lead screw 4 of the middle flat disc, the lead screw nut 52 of the middle flat disc drives the middle flat disc bracket 12 and the middle flat disc 16 to move back and forth along with the axis of the lead screw 4 of the middle flat disc to realize the process of speed regulating ratio for the middle flat disc 16. The lead screw gear 3 of the middle flat disc is fixed on the lead screw 4 of the middle flat disc, the lead screw gear 3 of the middle flat disc can be a worm gear, and the lead screw gear 3 of the middle flat disc is matched with the regulating shaft 5 of the middle flat disc gear on the regulating shaft 6 of the middle flat disc; the regulating shaft 5 of the middle flat disc gear can be a worm, the regulating shaft 5 of the middle flat disc gear is fixed and connected with the regulating shaft 6 of the middle flat disc, the regulating shaft 6 of the middle flat disc is arranged vertical to the axis of the lead screw 4 of the middle flat disc, the regulating shaft 6 of the middle flat disc is arranged in parallel with the output shaft 36, and the speed regulating pinion 1 of the middle flat disc on the regulating shaft 6 of the middle flat disc is fixed and connected with the regulating shaft 6 of the middle flat disc.

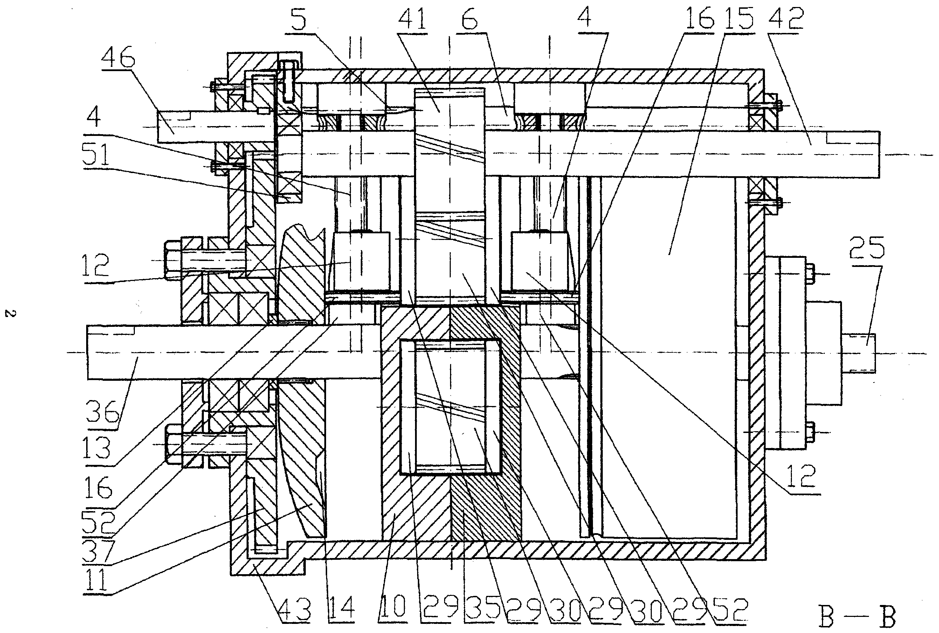

Position 1 of the regulating shaft end 46 of the middle flat disc: The regulating shaft end 46 of the middle flat disc is arranged on one speed regulating pinion 1 of the middle flat disc (see Figure 2);

Position 2 of the regulating shaft end 46 of the middle flat disc: The regulating shaft end 46 of the middle flat disc is separately matched with the gear 47 at the regulating shaft end of the middle flat disc, and the regulating shaft end 46 of the middle flat disc is matched with the speed regulating gearwheel 37 of the middle flat disc (Figure 29).

The speed regulating pinion 1 of the middle flat disc of the speed regulating ratio system of each middle flat disc 16 is matched with the same speed regulating gearwheel 37 of the middle flat disc, 1. In Position 1 of the regulating shaft end 46 of the middle flat disc: The speed regulating power is transmitted from the regulating shaft end 46 of the middle flat disc to one speed regulating pinion 1 of the middle flat disc and then transmitted to each of the rest of speed regulating pinions 1 of the middle flat discs through the speed regulating gearwheel 37 of the middle flat disc; 2.

In Position 2 of the regulating shaft end 46 of the middle flat disc: The speed regulating power is transmitted to the speed regulating gearwheel 37 of the middle flat disc from the regulating shaft end 46 of the middle flat disc, and then transmitted to each of the rest of speed regulating pinions 1 of the middle flat discs by the speed regulating gearwheel 37 of the middle flat disc, and each speed regulating pinion 1 of the middle flat disc drives each middle flat disc 16 to move back and forth along the axis of the lead screw 4 of the middle flat disc through the speed regulating ratio system of each middle flat disc 16 to realize the regulation of speed ratio by the middle flat disc 16.

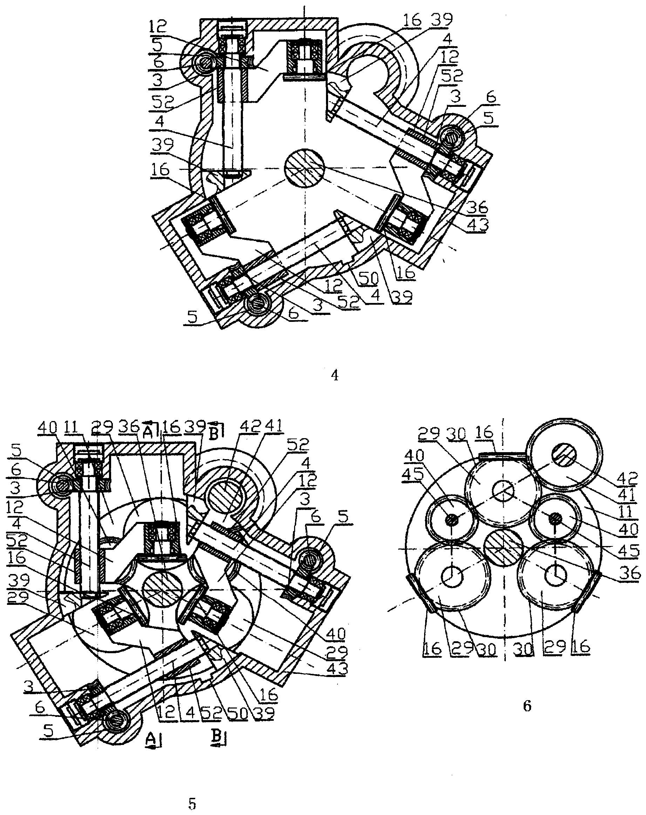

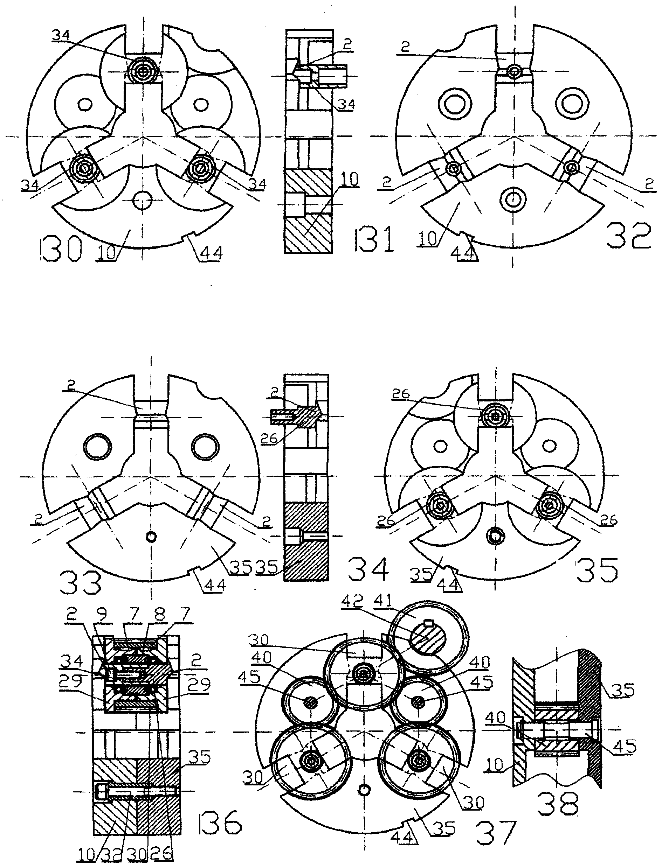

The bracket keys of the driving flat disc are added in the housing key groove 50 (see Figure 4 and Figure 5) and the bracket key groove 44 of the driving flat disc (see Figure 30 and Figure 32) on the housing 43, so that the driving flat disc bracket (including the half bracket I 10 of the driving flat disc and the half bracket II 35 of the driving flat disc) can only slide relative to the axis of the housing 43 but can't rotate.

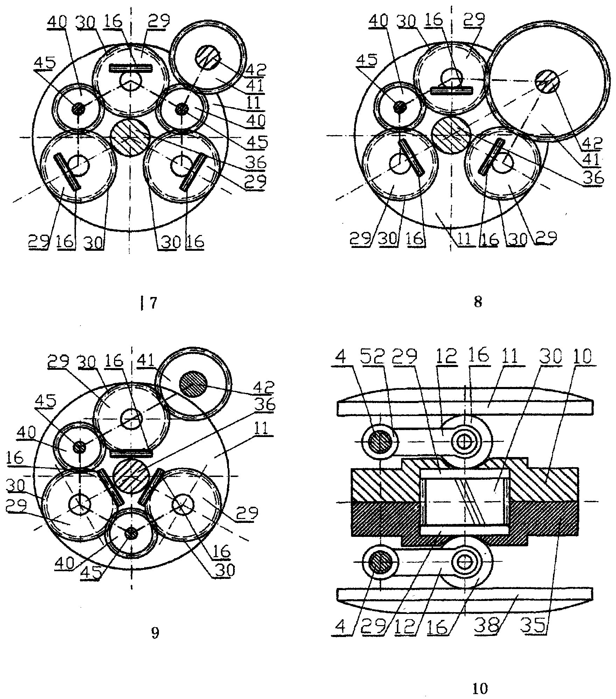

It can be seen in Figure 10, Figure 11, Figure 12, Figure 13, Figure 14, Figure 15, Figure 16, Figure 17, Figure 18, Figure 19, Figure 20, Figure 21, Figure 22 and Figure 23, middle flat disc 16 system: the lead screw nut 52 of the middle flat disc at one end of the middle flat disc bracket 12 is matched with the lead screw 4 of the middle flat disc 4, the other end is matched with the middle flat disc 16 through the middle flat disc bearing, the lead screw 4 of the middle flat disc is arranged on the side of the middle flat disc 16, the lead screw nut 52 of the middle flat disc is integrated or fixed and connected with the middle flat disc bracket 12, and the middle flat disc 16 works between the driving flat disc 29 and the driven flat discs (including the fixed driven flat disc 11, the sliding driven flat disc 38 and the middle driven flat disc 27). The lead screw of the middle flat disc can be sliding lead screw, rolling lead screw (including ball lead screw and roller lead screw) and hydrostatic lead screw, and the matched lead screw nut 52 of the middle flat disc can be sliding screw nut, rolling screw nut (including ball nut and roller nut) and hydrostatic nut..

Middle flat disc system: The lead screw nut 52 of the middle flat disc on one part of the middle flat disc bracket 12 is matched with the lead screw 4 of the middle flat disc, the other part of the middle flat disc bracket 12 is matched with the middle flat disc 16 through the middle flat disc bearing 33, the lead screw 4 of the middle flat disc is arranged on the side of the middle flat disc 16, the lead screw nut 52 of the middle flat disc is integrated or fixed and connected with the middle flat disc bracket 12, and the middle flat disc 16 works between the driving flat discs and the driven flat discs (including the fixed driven flat disc 11, the sliding driven flat disc 38 and the middle driven flat disc 27). The lead screw 4 of the middle flat disc can be sliding lead screw, rolling lead screw (including ball lead screw and roller lead screw) and hydrostatic lead screw; the matched lead screw nut of the middle flat disc can be sliding nut, rolling nut (including ball nut and roller nut) and hydrostatic nut.

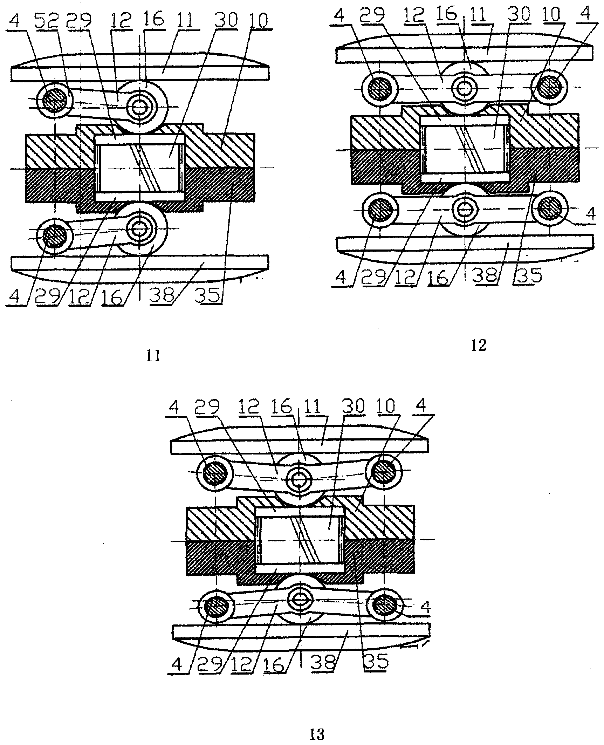

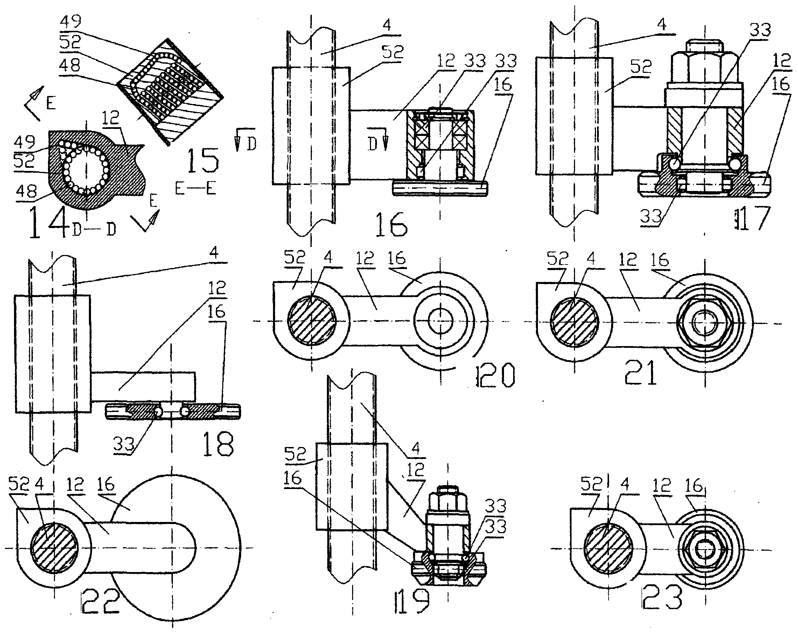

Several schemes of the middle flat disc: 1. The middle flat disc bearing 55 is a double-layer bearing arranged in the center role of the middle flat disc 10 (see Figure 17 and Figure 21). 2. The middle flat disc bearing 55 is a single-layer bearing arranged in the center hole of the middle flat disc 10 (see Figure 18 and Figure 22). 3. The middle flat disc bearing 55 is a double-layer bearing arranged in the center role of the middle flat disc 10, and the middle flat disc 10 is thickened (see Figure 19 and Figure 23). 4. The middle flat disc 10 has no center hole, the middle flat disc bearing 55 is installed on the center shaft of the middle flat disc 10, and the center shaft of the middle flat disc 10 is fixed and connected or integrated with the middle flat disc 10 (see Figure 16 and Figure 20); Type 1 of the middle flat disc bracket 12, 1. Each middle flat disc 10 has one middle flat disc bracket 12 and one lead screw 6 of the middle flat disc 6, and the axis of the middle flat disc bracket 12 is vertical to the axis of the output shaft 37 (see Figure 10); 2. Each middle flat disc 10 has one middle flat disc bracket 12 and one lead screw 6 of the middle flat disc, the axis of the middle flat disc bracket 12 is in a certain angle with the axis of the output shaft 37 (see Figure 11); 3. Each middle flat disc 10 has two middle flat disc brackets 12 and two lead screws 6 of the middle flat disc, the axes of the middle flat disc brackets 12 are vertical to the axes of the output shaft 37 (see Figure 12); 4. Each middle flat disc 10 has two middle flat disc brackets 12 and two lead screws 6 of the middle flat disc, and the axes of the middle flat disc brackets 12 are in a certain angle with the axes of the output shafts 37 (see Figure 13).

It can be seen in Figure 6, Figure 7, Figure 8 and Figure 9, power input system: In the structure of three middle flat discs 16 in parallel, schemes for the structural system of input shaft gear 41, intermediate gear 40 of the driving flat disc and driving flat disc gear 30: 1. The input shaft gear 41 is matched with one driving flat disc gear 30, and each pair of neighboring driving flat disc gears 30 are matched with the same intermediate gear 40 of the driving flat disc (see Figure 6 and Figure 9); 2. Each pair of neighboring driving flat disc gear 30 are matched with the same intermediate gear 40 of the driving flat disc, and the input shaft gear 41 transmits power to each driving flat disc gear 30 through the intermediate gear 40 of the driving flat disc (see Figure 7); 3. The input shaft gear 41 transmits the power to two driving flat disc gears 30 simultaneously, and one of the driving flat disc gears 30 then transmits the power to the other driving flat disc gear 30 through the intermediate gear 40 of the driving flat disc (see Figure 8). This kind of continuously variable transmission has intermediate gear 40 of the driving flat discs which can be matched with two driving flat disc gears 30, respectively, and the intermediate gear 40 of the driving flat disc can be matched with the input shaft gear 41 at the same time of matching with one driving flat disc gear 30.

The position of middle flat disc 16 in Figure 6 is the minimum reverse speed ratio; the position of middle flat disc 16 in Figure 7 is the maximum reverse speed ratio; the position of middle flat disc 16 in Figure 8 is the maximum forward speed ratio; the position of middle flat disc 16 in Figure 9 is the minimum forward speed ratio.

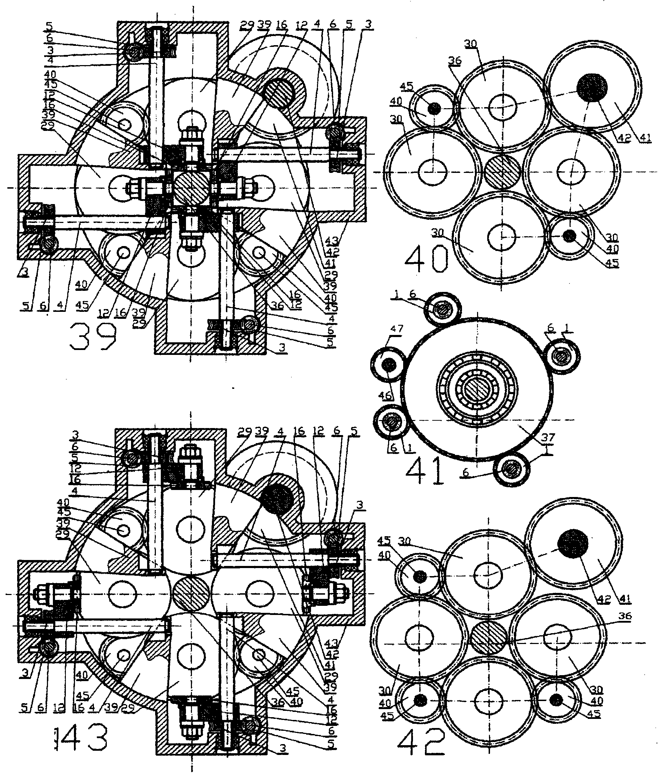

It can be seen in Figure 39, Figure 40, Figure 41, Figure 42 and Figure 43 that, in the continuously variable transmission with four middle flat discs 16 in parallel, except that the number of middle flat discs 16 is increased by 1/3 than the number of middle flat discs 16 with three middle flat discs 16 in parallel, and the numbers of the rest of components matched with the middle flat disc 16 are also increased by 1/3 accordingly.

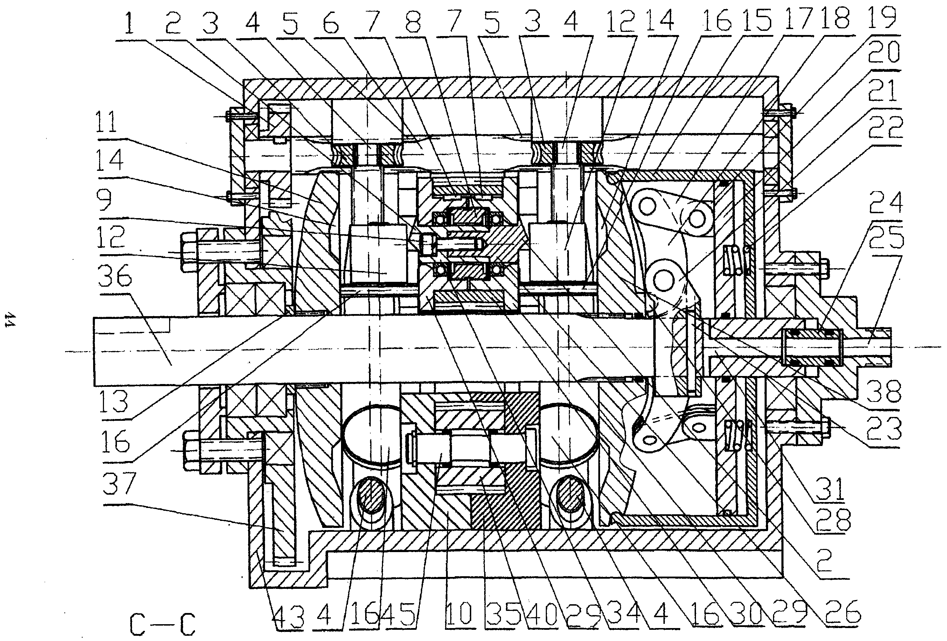

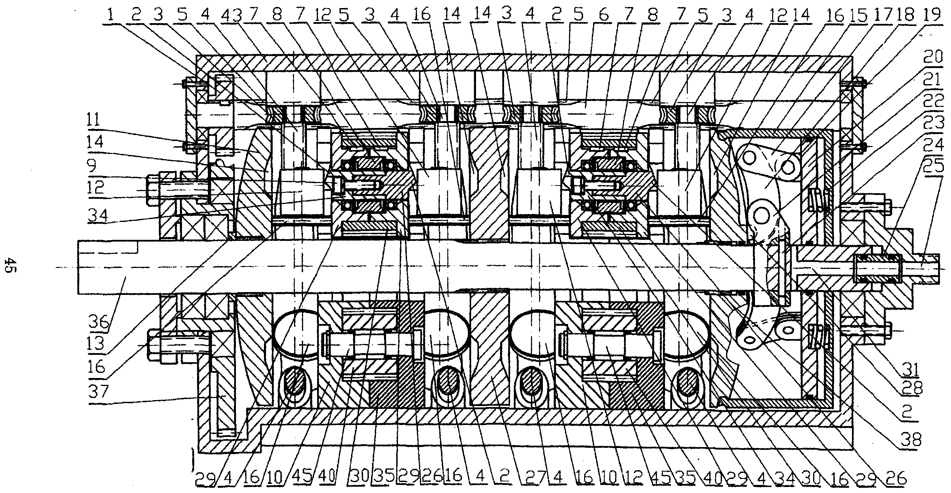

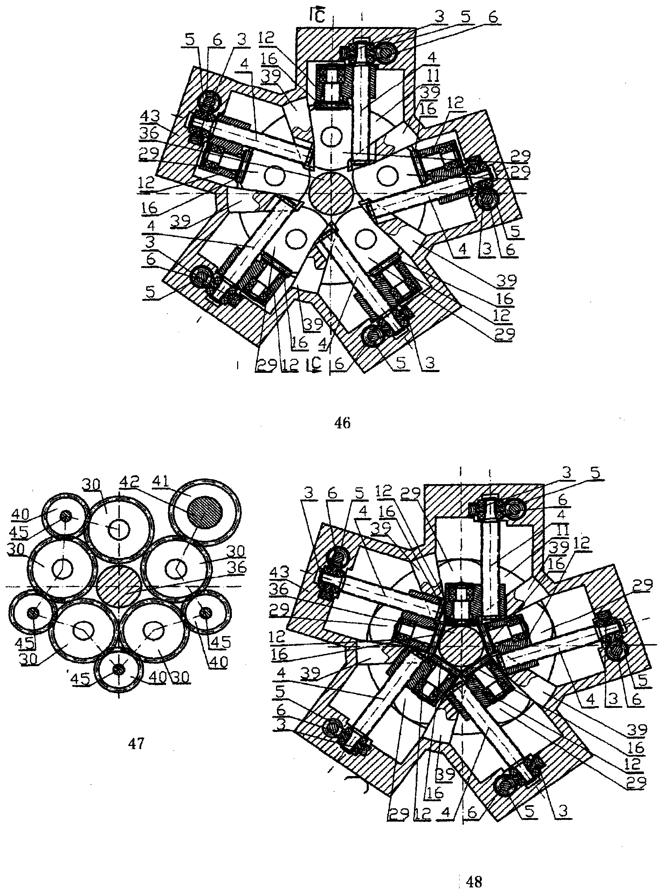

It can be seen in Figure 44, Figure 45, Figure 46, Figure 47, Figure 48 and Figure 49, in the continuously variable transmission with five middle flat discs 16 in parallel, except that the number of middle flat discs 16 is increased by 2/3 than the number of middle flat discs 16 with three middle flat discs 16 in parallel, and the numbers of the rest of components matched with the middle flat disc 16 are also increased by 2/3 accordingly.

In the figures, parallel and serial structure: the number of middle flat discs 16 connected with the same driven flat disc (including the fixed driven flat disc 11, the middle driven flat disc 27 and the sliding driven flat disc 28) is considered as the number of parallel connections, the invention can have more than two (including two) middle flat discs 16 in parallel, the number of driving flat discs 29 is the same as the number of middle flat discs 16 in parallel, and the number of the speed regulating ratio systems of each middle flat disc 16 is also the same as the number of middle flat discs 16 in parallel; the structure between every two neighboring driven flat discs (including the fixed driven flat disc 11, the sliding driven flat disc 38 and the middle driven flat disc 27) is called as a transmission, more than two (including two) transmissions can be connected in series, and the number of transmissions in series is the number of serial connections for the continuously variable transmission. Manner of serial connection: Multiple transmissions in series share the same output shaft 36, multiple transmissions in series share the same input shaft 42, and the number of speed regulating ratio systems for each middle flat disc 16 is also the same as the number of middle flat discs 16 in parallel.

The work principles of the continuously variable transmission are explained by combining with the figures:
1. Work principle of power transmission: Power enters the continuously variable transmission from the input shaft 42, and the power is transmitted to the input shaft gear 41 through the input shaft 42. Power transmission route according to the schemes for the structural system of input shaft gear 41, intermediate gear 40 of the driving flat disc and driving flat disc gear 30: 1. The input shaft gear 41 transmits the power to one driving flat disc gear 30, and the driving flat disc gear 30 then transmits the power to other driving flat disc gears 30 through the intermediate gear 40 of the driving flat disc; 2. Each pair of neighboring driving flat disc gears 30 are connected by one intermediate gear 40 of the driving flat disc, the input shaft gear 41 transmits the power to each driving flat disc gear 30 through the intermediate gear 40 of the driving flat disc. 3. The input shaft gear 41 transmits the power to two driving flat disc gears 30 simultaneously, and then one of the driving flat disc gears 30 transmits the power to the other driving flat disc gear 30 through the intermediate gear 40 of the driving flat disc. The driving flat disc gear 30 then transmits the power to the driving flat discs 29, when the hydraulic cylinder is compressed, the driving flat discs 29 transmit the power to the middle flat disc 16 by friction, the middle flat disc 16 also transmits the power to the fixed driven flat disc 11 and the sliding driven flat disc 38 through friction, the power is transmitted to the output shaft 36 through the driven flat discs, and the power is transmitted out of the transmission by the output shaft 36.
2. Work principle of the hydraulic cylinder: After the hydraulic oil is pressurized, on the one hand, the oil pressure acts on the sliding driven flat disc 38; on the other hand, the oil pressure acts on the hydraulic plate 20, the hydraulic plate 20 pulls the hinge 17 of the hydraulic lever through the hinging base 19 of the hydraulic lever, then the hinge 17 of the hydraulic lever pulls the hydraulic lever 18, and the hydraulic lever 18 compresses the sliding driven flat disc 38 through the hydraulic lever block 28 by taking the hydraulic lever bracket 21 as the fulcrum.
3. Work principle for speed regulating ratio of middle flat disc 16: It is specified that the speed ratio is obtained by dividing the absolute value of the input shaft 42 speed by the absolute value of the output shaft 36 speed. The speed regulating power enters the continuously variable transmission from the regulating shaft end 46 of the middle flat disc, 1. In the structure that the regulating shaft end 46 of the middle flat disc is fixed on the regulating shaft 6 of the middle flat disc, the speed regulating power is transmitted from the regulating shaft end 461 of the middle flat disc to one speed regulating pinion of the middle flat disc, then the speed regulating pinion 1 of the middle flat disc transmits the speed regulating power to the speed regulating gearwheel 37 of the middle flat disc, the speed regulating gearwheel 37 of the middle flat disc then transmits it to each of the rest of speed regulating pinions 1 of the middle flat disc, and each speed regulating pinion 1 of the middle flat disc drives each middle flat disc 16 to move back and forth along the axis of the lead screw 4 of the middle flat disc through the speed regulating ratio system of each middle flat disc 16 to realize the regulation of the speed ratio of the middle flat disc 16; 2. In the structure that the regulating shaft end 46 of the middle flat disc is separately fixed and connected with the regulating shaft end 47 of the middle flat disc gear, the regulating shaft end 47 of the middle flat disc gear is matched with the speed regulating gearwheel 37 of the middle flat disc, the speed regulating power is transmitted from the regulating shaft end 46 of the middle flat disc to the speed regulating gearwheel 37 of the middle flat disc through the regulating shaft end 47 of the middle flat disc gear, the speed regulating gearwheel 37 of the middle flat disc then transmits it to each of the rest of speed regulating pinions 1 of the middle flat disc, each speed regulating pinion 1 of the middle flat disc drives each middle flat disc 16 to move back and forth along the axis of the lead screw 4 of the middle flat disc through the speed regulating ratio system of each middle flat disc 16 to realize the regulation of speed ratio of the middle flat disc 16.

## Claims

1. A continuously variable transmission with side speed regulating lead screw, **characterized in that**: the lead screw nut of the middle flat disc on one part of the middle flat disc bracket is matched with the lead screw of the middle flat disc, the other part of the middle flat disc bracket is matched with the middle flat disc through the middle flat disc bearing, and the lead screw of the middle flat disc is arranged on the side of the middle flat disc.

2. The continuously variable transmission according to Claim 1, **characterized in that**: the hydraulic compaction system comprises a hydraulic lever bracket which is fixed and connected with the output shaft, when the hydraulic cylinder is compressed, one end of the hydraulic lever pushes against the sliding driven flat disc, the hole in the middle of the hydraulic lever is hinged with the hydraulic lever bracket, the hydraulic plate pulls the other end of the hydraulic lever, the output shaft passes through the center hole of the hydraulic plate, and the hydraulic plate can slide on the output shaft relative to it.

3. The continuously variable transmission according to Claim 1, **characterized in that**: There are driven flat disc grooves on the driven flat discs. Owing to the existence of the driven flat disc grooves, the other end of the middle flat disc can move in the driven flat disc grooves. When the driven flat disc grooves are deep enough, as the middle flat disc gets across the driven flat disc grooves, the compaction system is decompressed, and the middle flat disc can also span over the bracket beam of the driving flat disc without moving the sliding driven flat disc; when the driven flat disc grooves are not deep enough, as the middle flat disc gets across the driven flat disc grooves, the compaction system is decompressed, and the middle flat disc can span over the bracket beam of the driving flat disc only when the sliding driven flat disc is moved towards the compaction system for a certain distance, but the moving distance of the sliding driven flat disc shall be less than that when there is no sliding driven flat disc groove on the sliding driven flat disc.

4. The continuously variable transmission according to Claim 1, **characterized in that**: the continuously variable transmission has the intermediate gear of the driving flat discs which can be matched with two driving flat disc gears, respectively, and the intermediate gear of the driving flat disc can be matched with the input shaft gear at the same time of matching with one driving flat disc gear.

5. The continuously variable transmission according to Claim 1, **characterized in that**: The continuously variable transmission can have two middle flat discs in parallel, as well as more than two middle flat discs in parallel.

6. The continuously variable transmission according to Claim 1, **characterized in that**: The continuously variable transmission can have two middle flat discs in series, as well as more than two middle flat discs in series.

7. The continuously variable transmission according to Claim 1, **characterized in that**: the speed regulating ratio system of the middle flat disc comprises: the threaded part of the lead screw of the middle flat disc is matched with the lead screw nut of the middle flat disc on the middle flat disc bracket, the lead screw nut of the middle flat disc is fixed and connected or integrated with the middle flat disc bracket, and along with the rotation of the lead screw of the middle flat disc, the lead screw nut of the middle flat disc drives the middle flat disc bracket and the middle flat disc to move back and forth along with the axis of the lead screw of the middle flat disc to realize the process of speed regulating ratio for the middle flat disc.

8. The continuously variable transmission according to Claim 1, **characterized in that**: the speed regulating ratio system of the middle flat disc also comprises: The lead screw gear of the middle flat disc is fixed on the lead screw of the middle flat disc, the lead screw gear of the middle flat disc is matched with the regulating shaft gear of the middle flat disc gear on the regulating shaft of the middle flat disc, the regulating shaft gear of the middle flat disc is fixed and connected with the regulating shaft of the middle flat disc, the regulating shaft of the middle flat disc is arranged vertical to the axis of the lead screw of the middle flat disc, the regulating shaft of the middle flat disc is arranged in parallel with the output shaft, and the speed regulating pinion of the middle flat disc on the regulating shaft of the middle flat disc is fixed and connected with the regulating shaft of the middle flat disc. The speed regulating pinions of each flat disc are matched with the speed regulating gearwheel of the same flat disc.
